## Europäisches Patentamt
## European Patent Office
## Office européen des brevets

(19)

(11) Numéro de publication: **0 158 557**
**B1**

(12)
# FASCICULE DE BREVET EUROPÉEN

(45) Date de publication du fascicule du brevet:
**14.10.87**

(51) Int. Cl.⁴: **H 01 S 3/083**

(21) Numéro de dépôt: **85400572.5**

(22) Date de dépôt: **25.03.85**

(54) **Dispositif d'élimination des bruits d'activation d'un gyromètre laser et gyromètre laser utilisant ledit dispositif.**

(30) Priorité: **30.03.84 FR 8405000**

(43) Date de publication de la demande:
**16.10.85 Bulletin 85/42**

(45) Mention de la délivrance du brevet:
**14.10.87 Bulletin 87/42**

(84) Etats contractants désignés:
**DE GB IT**

(56) Documents cité:
**US-A-3 373 650**
**US-A-3 535 040**
**US-A-3 841 758**

(73) Titulaire: **SOCIETE FRANCAISE D'EQUIPEMENTS POUR LA NAVIGATION AERIENNE (S.F.E.N.A.), B.P. 59 Aérodrome de Villacoublay, F-78141 Velizy Villacoublay (FR)**

(72) Inventeur: **de Salaberry, Bernard, 4B, rue de la Ceinture, F-78000 Versailles (FR)**

(74) Mandataire: **Marquer, Francis, CABINET MOUTARD 35, avenue Victor Hugo Résidence Champfleury, F-78180 Voisins- le- Bretonneux (FR)**

EP 0 158 557 B1

## Description

La présente invention concerne un dispositif d'élimination des bruits d'activation d'un gyromètre laser.

D'une manière générale, on sait qu'un gyromètre laser consiste en un dispositif interférométrique effectuant un mélange de deux rayonmements laser engendrés, en sens inverse, dans un périmètre optique en boucle fermée réalisé dans un bloc optique, afin d'obtenir un système de franges d'interférence parallèles dont le défilement permet la mesure de la rotation du gyromètre autour d'un axe perpendiculaire au plan du périmètre.

Cette mesure est habituellement effectuée au moyen d'un organe de détection optoélectronique qui fournit, à sa sortie, un signal impulsionnel, dont chacune des impulsions correspond à un incrément d'angle de rotation du bloc optique. Ainsi, le comptage de ces impulsions permet d'obtenir un signal numérique représentatif de la position angulaire du bloc optique.

Ces gyromètres laser peuvent en outre comprendre, pour s'affranchir de leur défaut bien connu de zone aveugle, un dispositif d'activation mécanique qui consiste à faire osciller le bloc optique autour de son axe de mesure.

Cette activation mécanique présente l'inconvénient de rajouter un bruit important au signal utile représentant la rotation à mesurer.

Plusieurs solutions ont déjà été proposées en vue de supprimer ce bruit, solutions parmi lesquelles on mentionnera seulement:

- l'utilisation d'un dispositif optique qui, par une modification du chemin optique du rayonnement laser en fonction des déplacements du bloc optique par rapport à son support, crée un défilement des franges d'interférence en sens opposé de celui de la rotation de l'activation;

- le traitement numérique du signal de mesure, par un logiciel approprié, en vue de réaliser un filtrage de ce signal;

- la mesure de la position instantanée du bloc optique par rapport à son support et sa soustraction du signal utile.

Cette dernière mesure est couramment réalisée à partir de céramiques piézoélectriques ou de jauges de contraintes placées sur une des lames souples qui constituent l'articulation du dispositif d'activation.

Il s'avère que ces dispositifs présentent l'inconvénient d'être peu précis et peu stables en température.

L'invention propose donc un dispositif permettant d'obtenir une meilleure précision et une stabilité plus facilement maitrisée. A cet effet, elle utilise, pour la mesure du mouvement d'activation, un détecteur électromagnétique fournissant un signal analogique représentatif de la vitesse angulaire relative du bloc optique par rapport à son support.

Selon une caractéristique de l'invention, ce détecteur électromagnétique peut comprendre une bobine circulaire se déplaçant dans le champ radial d'un aimant permanent, ladite bobine et ledit aimant pouvant être placés indifféremment, l'un solidaire du bloc optique et l'autre solidaire du boîtier. De préférence, l'axe de sensibilité de ce détecteur électromagnétique est placé tangentiellement à un cercle centré sur l'axe de rotation du bloc optique sur son support.

Bien entendu, l'invention concerne également un gyromètre laser équipé d'un dispositif d'élimination des bruits d'activation tel que précédemment défini.

Des modes de réalisation de l'invention seront décrits ci-après, à titre d'exemples non limitatifs, avec référence aux dessins annexés dans lesquels:

La figure 1 est une coupe axiale schématique d'un gyromètre laser équipé d'un dispositif d'élimination des bruits d'activation, selon l'invention.

La figure 2 est une vue schématique de dessus, partiellement en coupe, du gyromètre laser représenté figure 1.

La figure 3 est un schéma théorique d'un premier mode d'exécution du circuit électronique équipant le gyromètre laser.

La figure 4 illustre un autre mode d'exécution du circuit électronique équipant le gyromètre laser.

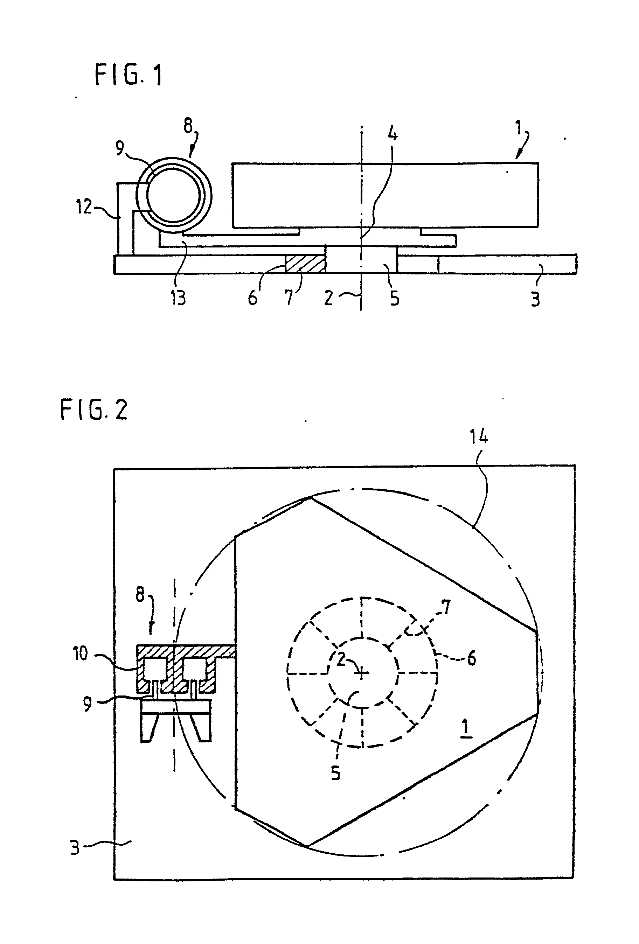

Tel que représenté sur les figures 1 et 2, le gyromètre laser se compose d'un bloc optique 1 monté oscillant autour d'un axe 2 sur la structure support 3 du gyromètre. Cette structure support peut, par exemple, consister en une partie d'un boîtier contenant l'ensemble du gyromètre. Dans tous les cas, elle est montée fixement sur le mobile dont on veut mesurer les déplacements. Dans cet exemple, le montage du bloc optique 1 sur la structure support 3 est assuré au moyen d'une pièce de liaison comprenant une platine circulaire 4 sur laquelle est fixé le bloc optique 1 et une partie cylindrique coaxiale 5 passant au travers d'un évidement cylindrique 6 de la structure support 3 et reliée à celle-ci au moyen d'une pluralité d'ailettes radiales élastiques 7.

Le bloc optique 1 se trouve par ailleurs soumis à un mouvement d'activation, autour de l'axe 2, engendré au moyen d'un moteur couple non représenté.

La mesure de ce mouvement d'activation (sinusoïdal) est effectuée par au moins un détecteur électromagnétique 8 comprenant une bobine circulaire 9 placée dans l'entrefer annulaire et radial d'un aimant permanent 10 présentant une section axiale (de révolution) sensiblement en forme de E.

Dans cet exemple, la bobine 9 est portée par une pièce de support 12 solidaire de la structure de support 3 du gyromètre, tandis que l'aimant 10 est porté par un bras 13 solidaire de la platine circulaire 4. Par ailleurs, la bobine 9 et l'aimant 10 sont axés (axe de sensibilité du détecteur) tangentiellement à un cercle 14 centré sur l'axe de rotation 2, de manière à ce que le mouvement d'activation du bloc optique 1 entraîne un déplacement relatif de la bobine 9 dans l'entrefer de l'aimant 10, dont l'amplitude est fonction de la distance de l'ensemble bobine 9 aimant 10 à l'axe de rotation 2. Cette distance est donc déterminée en fonction de l'amplitude du mouvement d'activation et de la longueur axiale de l'entrefer de l'aimant permanent 10, de manière à ce que le signal électrique de sortie de la bobine 9 soit de forme sinusoïdale et représente la vitesse relative de la bobine 9 dans l'aimant 10 et, par conséquent, la vitesse angulaire du bloc optique 1 par rapport à la structure support 3.

La stabilité de la tension de sortie de ce détecteur électromagnétique 8 dépend principalement des choix effectués pour réaliser la bobine 9 et l'aimant 10. Ainsi, on pourra avantageusement utiliser des ensembles aimant 9 - bobine 10 analogues à ceux qui servent à effectuer le rappel des pendules des accéléromètres pendulaires asservis de précision.

Dans de tels accéléromètres, la stabilité thermique du facteur d'échelle est assurée, soit par la nature de l'aimant 10 qui est alors compensé en température, soit par une compensation électrique effectuée à partir d'une mesure de température de l'accéléromètre.

Bien entendu, l'invention ne se limite pas au détecteur électromagnétique précédemment décrit. En effet, il est également possible d'utiliser, sans sortir du cadre de l'invention, des détecteurs électromagnétiques utilisant des bobines 9 ou des aimants 10 de formes et de dispositions différentes.

Par ailleurs, le signal issu de la bobine 9 pourra, bien entendu, être utilisé à la fois pour l'élimination des bruits d'activation du gyromètre laser et pour servir à asservir l'amplitude du mouvement d'activation.

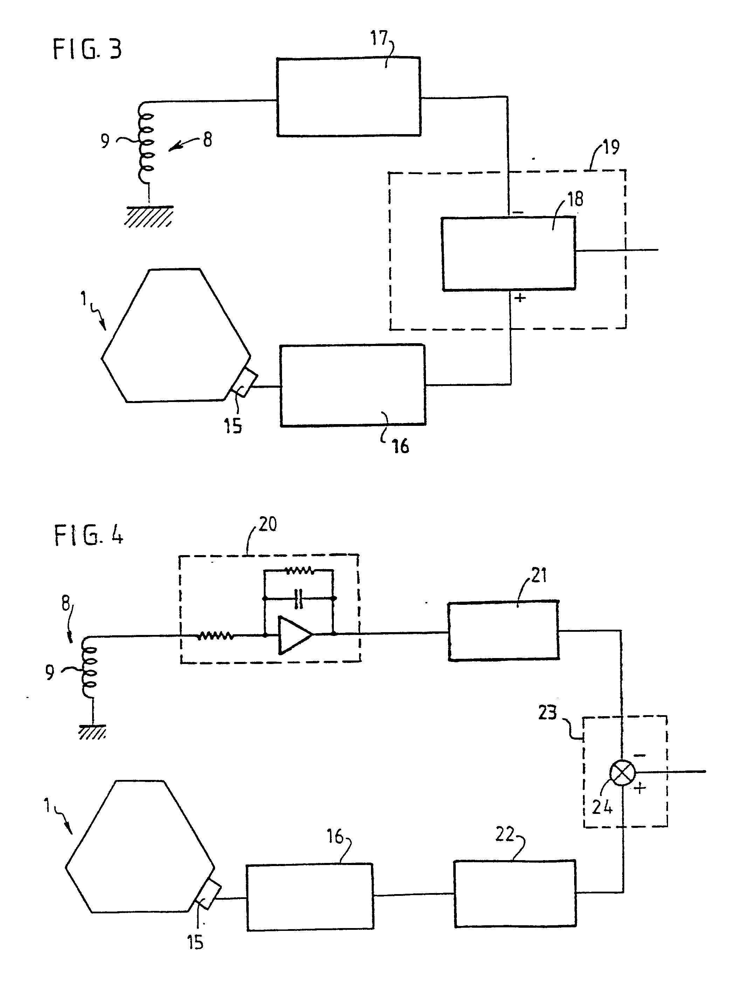

Les schémas représentés sur les figures 3 et 4 illustrent deux modes d'exploitation préférés du signal délivré par le détecteur électromagnétique.

Il convient tout d'abord de noter que, dans l'un et l'autre cas, le gyromètre laser comprend à la sortie du bloc optique 1, un dispositif de détection 15 des franges l'interférence produites par le mélange des deux rayonnements laser, ainsi qu'un circuit électronique de sortie 16 permettant de délivrer un signal impulsionnel, dont chacune des impulsions correspond à un incrément d'angle représentatif de la somme algébrique de la rotation de la structure support 3 par rapport à un système de référence fixe et de la rotation du bloc optique 1 par rapport a un système de coordonnées de référence lié à la structure support 3.

Dans l'exemple représenté sur la figure 3, le signal analogique fourni par la bobine 9 du détecteur électromagnétique est directement transmis à un convertisseur tension/fréquence 17 qui transforme le signal analogique (sinusoïdal) fourni par la bobine 9 en un signal impulsionnel dont chacune des impulsions représente un incrément d'angle entre le bloc optique 1 et la structure support 3.

Ces impulsions sont envoyées à un compteur-décompteur 18 qui reçoit également les impulsions issues du circuit électronique de sortie 16 du gyromètre laser. Ce compteur-décompteur 18 effectue la différence entre les informations issues du gyromètre et les informations issues du convertisseur 17 et fournit, en conséquence, un signal numérique représentatif de la position angulaire de la structure support 3 par rapport au système de coordonnées de référence fixe et, en conséquence, des mouvements du mobile que l'on veut mesurer. Ce compteur-décompteur 18 peut avantageusement faire partie d'un calculateur numérique 19 associé au gyromètre laser.

Dans l'exemple représenté sur la figure 4, le signal fourni par la bobine 9 du détecteur électromagnétique 6 est intégré par un intégrateur analogique 20 puis converti en information numérique de position angulaire par un convertisseur analogique/numérique rapide 21.

Dans ce cas, le signal impulsionnel produit par le dispositif électronique de sortie 16 du gyromètre laser (incréments d'angle de rotation) est transmis à un compteur-décompteur 22 qui fournit, à sa sortie, un signal numérique représentatif de la position angulaire du bloc optique 1 par rapport au système de coordonnées de référence fixe.

Le calculateur 23 servant à l'exploitation des informations du gyromètre laser, comprend alors des moyens 24 pour soustraire les données issues du convertisseur analogique/numérique 21 des données fournies par le compteur-décompteur 22.

Après la soustraction de ces donnees, (qui sont respectivement représentatives des mouvements du bloc optique 1 par rapport au système de coordonnées lié à la structure de support 3 et des mouvements du bloc optique 1 par rapport au système de coordonnées fixe) le calculateur 23 obtient des données relatives aux mouvements de la structure support 3 par rapport au système de coordonnées de référence, c'est-à-dire des données représentant exactement les mouvements du mobile à mesurer.

Il convient de noter que, pour éviter des dérives supplémentaires, les dispositifs décrits en regard des figures 3 et 4 peuvent en outre comprendre des moyens permettant de s'assurer que la moyenne des informations issues, soit du convertisseur tension/fréquence 17 (cas de la figure 3), soit du convertisseur analogique-numérique 21 (cas de la figure 4) est bien nulle dans le temps, puisque le signal détecté est un signal sinusoïdal. Ces moyens qui sont bien connus en eux-mêmes ne seront pas, par conséquent, décrits.

## Revendications

1. Dispositif d'élimination des bruits d'activation d'un gyromètre laser du type comprenant:

- un bloc optique (1) monté rotatif sur un support (3) et muni d'au moins un périmètre optique en boucle fermée, à l'intérieur duquel sont engendrés deux rayonnements laser en sens inverse,

- des moyens permettant d'effectuer un mélange de ces deux rayonnements en vue d'obtenir un système de franges d'interférence parallèles,

- un dispositif (15, 16) permettant de fournir un signal impulsionnel dont les impulsions sont représentatives d'un incrément d'angle de rotation du bloc optique (1) par rapport à un système de coordonnées de référence à partir de la mesure du défilement des franges d'interference,

- des moyens d'activation mécanique permettant de faire osciller le bloc optique (1) par rapport à son support (3), et

- des moyens permettant de soustraire au signal représentatif de la rotation du bloc optique (1) par rapport au système de coordonnées de référence, un signal représentatif des oscillations du bloc optique (1) par rapport à son support (3),

caractérisé en ce que le signal représentatif des oscillations du bloc optique (1) par rapport à son support (3) est obtenu au moyen d'un détecteur électromagnétique (8) comprenant au moins deux parties mobiles l'une par rapport à l'autre et respectivement solidarisées audit bloc optique (1) et audit support (3), ce détecteur électromagnétique (8) étant conçu pour fournir un signal analogique représentatif de la vitesse angulaire relative du bloc optique (1) par rapport à son support (3).

2. Dispositif selon la revendication 1, caractérisé en ce que le détecteur électromagnétique (8) est constitué par une bobine (9) portée par l'une ds deux susdites parties et se déplaçant dans le champ d'un aimant permanent (10) porté par l'autre partie.

3. Dispositif selon la revendication 2, caractérisé en ce que la susdite bobine (9) présente une forme circulaire et se déplace dans le champ magnétique radial engendré dans l'entrefer d'un aimant permanent (10) qui présente une section axiale sensiblement en forme de E.

4. Dispositif selon l'une des revendications précédentes, caractérisé en ce que le susdit détecteur électromagnétique (8) présente une structure similaire à celle d'un moteur couple de rappel d'un accéléromètre pendulaire asservi.

5. Dispositif selon l'une des revendications précédentes, caractérisé en ce que l'axe de sensibilité du détecteur électromagnétique (8) est placé tangentiellement à un cercle (14) centré sur l'axe de rotation (2) du mouvement d'activation du bloc optique (1).

6. Dispositif selon l'une des revendications précédentes, caractérisé en ce que les moyens permettant de retrancher au signal représentatif de la rotation du bloc optique (1) par rapport au système de coordonnées de référence, un signal représentatif des oscillations du bloc optique (1) par rapport à son support (3), comprennent:

- un convertisseur tension fréquence (17) transformant le signal analogique fourni par le susdit détecteur électromagnétique (8) en un premier signal impulsionnel dont chacune des impulsions représente un incrément d'angle de rotation entre le bloc optique (1) et le support (3), et

- un compteur-décompteur (18) qui reçoit ledit premier signal impulsionnel et un second signal impulsionnel dont les impulsions représentent les incréments d'angle de rotation du bloc optique (1) par rapport au système de coordonnées de référence.

7. Dispositif selon l'une des revendications précédentes, caractérisé en ce que les moyens permettant de retrancher au signal représentatif de la rotation du bloc optique (1) par rapport au système de coordonnées de référence fixe, un signal représentatif des oscillations du bloc optique (1) par rapport à son support (3), comprennent:

- un compteur-décompteur (22) permettant de transformer le signal impulsionnel dont les impulsions représentent des incréments d'angle de rotation du bloc optique (1) par rapport au système de référence fixe en un signal numérique représentatif de la position angulaire du bloc optique (1) par rapport audit système de coordonnées de référence,

- un intégrateur analogique (20) recevant le signal fourni par le détecteur électromagnétique (8) et dont la sortie est reliée à un convertisseur analogique-numérique (21) qui fournit une information numérique représentative de la position angulaire du bloc optique (1) par rapport à la structure support (3), et

- des moyens permettant de soustraire les informations fournies par ledit convertisseur analogique/numérique (21) des informations fournies par ledit compteur-décompteur (22).

8. Gyromètre laser du type comprenant:

- un bloc optique (1) monté rotatif sur un support (3) et muni d'au moins un périmètre optique en boucle fermée, à l'intérieur duquel sont engendrés deux rayonnements laser en sens inverse,

- des moyens permettant d'effectuer un mélange de ces deux rayonnements en vue d'obtenir un système de franges d'interférence parallèles,

- un dispositif (15, 16) permettant de fournir un signal impulsionnel dont les impulsions sont représentatives d'un incrément d'angle de rotation du bloc optique (1) par rapport à un système de coordonnées de référence à partir de la mesure du défilement des franges d'interférence,

- des moyens d'activation mécanique permettant de faire osciller le bloc optique (1) par rapport à son support (3), et

- des moyens permettant de soustraire au signal représentatif de la rotation du bloc optique (1) par rapport au système de coordonnées de référence, un signal représentatif des oscillations du bloc optique (1) par rapport à son support (3),

caractérisé en ce qu'il comprend un dispositif d'élimination des bruits d'activation selon l'une des revendications précédentes.

## Patentansprüche

1. Vorrichtung zur Unterdrückung von Vibrationsgeräuschen in einem Laserkreisel der Art mit:

- einer optischen Einheit (1), die drehbar auf einen Sockel (3) montiert ist und mit wenigstens einem optischen Perimeter in Form einer prozessgeschlossenen Schleife versehen ist, in dessen Innerem zwei Laserstrahlen in entgegengesetzter Richtung erzeugt werden

- Mitteln zur Mischung dieser beiden Strahlen um ein System paralleler Interferenzstreifen zu erhalten,

- einer Vorrichtung (15, 16), welche ein Impulssignal abgeben kann, dessen Impulse repräsentativ sind für ein Drehwinkelinkrement der optischen Einheit (1) im Verhältnis zu einem Referenzkoordinatensystem, ausgehend von der Durchlaufmessung der Interferenzstreifen,

- mechanischen Aktivierungsmitteln, um die optische Einheit (1) im Verhältnis zu ihrem Sockel (3) in Schwingung zu versetzen,

> Mitteln, um dem Signal, welches repräsentativ ist für die Drehung der optischen Einheit (1) im Verhältnis zum Referenzkoordinatensystem, ein Signal zu entnehmen, welches repräsentativ ist für die Schwingungen der optischen Einheit (1) im Verhältnis zu ihrem Sockel (3), dadurch gekennzeichnet, dass man das Signal, welches repräsentativ ist für die Schwingungen der optischen Einheit (1) im Verhältnis zu ihrem Sockel (3) mit Hilfe eines elektromagnetischen Detektors (8) erhält, der mindestens zwei im Verhältnis zueinander bewegliche Teile enthält, die jeweils an der besagten optischen Einheit (1) und am besagten Sockel (3) befestigt sind, wobei dieser elektromagnetische Detektor (8) so ausgelegt ist, dass er ein Analogsignal abgibt welches repräsentativ ist für die relative Winkelgeschwindigkeit der optischen Einheit (1) im Verhältnis zu ihrem Sockel (3).

2. Vorrichtung nach Anspruch 1, dadurch gekennzeichnet dass der elektromagnetische Detektor (8) von einer Spule (9) gebildet wird, die von einem der obengenannten Teile getragen wird und sich im Feld eines vom anderen Teil getragenen Dauermagneten (10) bewegt.

3. Vorrichtung nach Anspruch 2 dadurch gekennzeichnet, dass die obengenannte Spule (9) eine Kreisform besitzt und sich im radialen, im Luftspalt eines Dauermagneten (10) erzeugten Magnetfeldes bewegt, dessen axialer Schnitt im wesentlichen die Forme eines E hat.

4. Vorrichtung nach einem der vorhergehenden Ansprüche, dadurch gekennzeichnet, dass der besagte elektromagnetische Detektor (8) eine Struktur gleich der eines Motors zur Rückstellung eines gesteuerten Pendelbeschleunigungsmessers besitzt.

5. Vorrichtung nach einem der vorhergehenden Ansprüche dadurch gekennzeichnet dass die Empfindlichkeitsachse des elektromagnetischen Detektors (8) tangential zu einem Kreis (14) angeordnet ist, welcher um die Drehachse (2) der Aktivierungsbewegung der optischen Einheit (1) ausgerichtet ist.

6. Vorrichtung nach einem der vorhergehenden Ansprüche, dadurch gekennzeichnet dass die Mittel, mit deren Hilfe es möglich ist, dem Signal, welches repräsentativ ist für die Drehung der optischen Einheit (1) im Verhältnis zum Referenzkoordinatensystem, ein Signal zu entnehmen, welches repräsentativ für die Schwingungen der optischen Einheit (1) im Verhältnis zu ihrem Sockel (3) ist, enthalten:

- einen Spannungs-Frequenzumsetzer (17) welcher das vom besagten elektromagnetischen Detektor (8) abgegebene Analogsignal in ein erstes Impulssignal umsetzt, bei dem jeder Impuls ein Drehwinkelinkrement zwischen der optischen Einheit (1) und dem Sockel (3) darstellt und

- einen Zweirichtungszähler (18) der besagtes erstes Impulssignal erhält sowie ein zweites Impulssignal, dessen Impulse das Drehwinkelinkrement der optischen Einheit (1) im Verhältnis zum Referenzkoordinatensystem darstellen.

7. Vorrichtung nach einem der vorhergehenden Ansprüche, dadurch gekennzeichnet, dass die Mittel, mit deren Hilfe es möglich ist, dem Signal, welches repräsentativ ist für die Drehung der optischen Einheit (1) im Verhältnis zum stationären Referenzkoordinatensystem ein Signal zu entnehmen, welches repräsentativ ist für die Schwingungen der optischen Einheit (1) in Verhältnis zu ihrem Sockel (3) enthalten:

- einen Zweirichtungszähler (22) mit dessen Hilfe es möglich ist, das Impulssignal, dessen Impulse Drehwinkelinkremente der optischen Einheit (1) im Verhältnis zum stationären Referenzsystem darstellen, in ein Digitalsignal zu verwandeln, welches repräsentativ ist für die Winkelposition der optischen Einheit (1) im Verhältnis zum besagten Referenzkoordinatensystem,

- einen Analogintegrator (20), welcher das vom elektromagnetischen Detektor (8) abgegebene Signal erhält und dessen Ausgang an einen Analog-Digitalumsetzer (21) angeschlossen ist, der eine Digitalinformation abgibt, die repräsentativ ist für die Winkelposition der optischen Einheit (1) im Verhältnis zur Sockelstruktur (3), und
- Mittel um die vom besagten Analog-Digitalumsetzer (21) abgegebenen Information von den vom besagten Zweirichtungszähler (22) abgegebenen Information abzuziehen.

8. Laserkreisel der Art mit:
- einer optischen Einheit (1) die drehbar auf einen Sockel (3) montiert und mit mindestens einem optischen Perimeter in Form einer prozessgeschlossen Schleife versehen ist, in dessen Innerem zwei Laseratrahlen in entgegengesetzter Richtung erzeugt werden,
- Mitteln zur Mischung dieser beiden Strahlen um ein System paralleler Inteferenzstreifen zu erhalten
- einer Vorrichtung (15, 16) zur Abgabe eines Impulssignals, dessen Impulse repräsentativ sind für ein Drehwinkelinkrement der optischen Einheit (1) im Verhältnis zu einem Referenzkoordinatensystem, ausgehend von der Durchlaufmessung der Interferenzstreifen,
- Mitteln, zur mechanischen Aktivierung, die es ermöglichen, die optische Einheit (1) im Verhältnis zu ihrem Sockel (3) in Schwingung zu versetzen, und
- Mitteln, um vom Signal, welches repräsentativ ist für die Drehung der optischen Einheit (1) im Verhältnis zum Referenzkoordinatensystem, ein Signal abzuziehen, welches repräsentativ ist für die Schwingungen der optischen Einheit (1) im Verhältnis zu ihrem Sockel (3), dadurch gekennzeichnet, dass er eine Vorrichtung zur Unterdrückung von Vibrationsgeräuschen nach einem der vorhergehenden Ansprüche enthält.

**Claims**

1. An apparatus for eliminating activation noise in a laser gyrometer, comprising:
- an optical unit mounted for rotation on a support (3) and provided with at least one optical perimeter forming a closed loop, inside which two laser radiation beams in opposite directions are produced,
- means adapted to effect a mixing of these two radiations so as to obtain a system of parallel interference fringes.
- a device (15, 16) adapted to supply an impulse signal the impulses of which are representative of an increment of the angle of rotation of the optical unit (1) with respect to a system of reference coordinates based on measurement of the frequency of movement of the interference fringes,
- means for mechanical activation adapted to put the optical unit (1) into oscillation with respect to its support (3) and
- means for subtracting from the signal representative of the rotation of the optical unit (1) with respect to the system of reference coordinates, a signal representative of the oscillation of the optical unit (1) with respect to its support (3),
characterized in that the signal representative of the oscillations of the optical unit (1) with respect to its support (3) is obtained by means of an electromagnetic sensor (8) comprising at least two parts movable with respect to each other and respectively secured to said optical unit (1) and to said support (3) said electromagnetic sensor (8) being arranged so as to supply an analog signal representative of the relative angular speed of the optical unit (1) with respect to its support (3).

2. The apparatus as claimed in claim 1, characterized in that the electromagnetic sensor (8) is formed by a coil (9) borne by one of said two parts and moving within the field of a permanent magnet (10) borne by the other part.

3. The apparatus according to claim 2, characterized in that said coil (9) has a circular form and moves within the radial magnetic field originated in the air gap of a permanent magnet (10) whose axial section is essentially an E.

4. The apparatus as claimed in one of the preceding claims, characterized in that said electromagnetic sensor (8) has a structure similar to that of a motor exerting a reset torque on a controlled pendular accelerometer.

5. The apparatus according to one of the preceding claims, characterized in that the axis of sensitivity of the electromagnetic sensor (8) is disposed tangentially with respect to a circle (14) centered on the axis of rotation (2) of the activation movement of the optical unit (1).

6. The apparatus according to one of the preceding claims, characterized in that the means for subtracting from the signal representative of the rotation of the optical unit (1) with respect to the system of reference coordinates, a signal representative of the oscillations of the optical unit (1) with respect to its support (3), comprise:
- a voltage frequence converter (17) converting the analog signal supplied by said electromagnetic sensor (8) into a first impulse signal, each impulse of which represents an increment of the angle of rotation between the optical unit (1) and the support (3), and
- a counter-decounter (18) which receives said first impulse signal and a second impulse signal, the impulses of which represent the increments of the angle of rotation of the optical unit (1) with respect to the system of reference coordinates.

7. The apparatus as claimed in one of the preceding claims, characterized in that the means adapted for subtracting from the signal representative of the rotation of the optical unit (1) with respect to the fixed system of reference coordinates, a signal representative of the oscillations of the optical unit (1) with respect to its support (3), comprise:

- a counter-decounter (22) adapted to convert the impulse signal, the impulses of which represent increments of the angle of rotation of the optical unit (1) with respect to the fixed reference system into a digital signal representative of the angular position of the optical unit (1) with respect to said system of reference coordinates

- an analog integrator (20) receiving the signal supplied by the electromagnetic sensor (8) and whose output is connected to an analog-digital converter (21) supplying digital information representative of the angular position of the optical unit (1) with respect to the support structure (3), and

- means adapted for subtracting the information supplied by said analog/digital converter (21) from the information supplied, by said counter-decounter.

8. A laser gyrometer of the type comprising:

- an optical unit mounted for rotation on a support (3) and provided with at least one optical perimeter forming a closed loop inside which two laser radiations in opposite directions are originated,

- means adapted for effecting a mixing of these two radiations with a view of obtaining a system of parallel interference fringes,

- a device (15, 16) adapted to supply an impulse signal, the impulses of which are representative of an increment of the angle of rotation of the optical unit (1) with respect to a system of reference coordinates based on measurement of the passing frequence of the interference fringes,

- means for mechanical activation adapted to put the optical unit (1) into oscillation with respect to its support (3), and

- means for subtracting from the signal representative of the rotation of the optical unit (1) with respect to the system of reference coordinates, a signal representative of the oscillations of the optical unit (1) with respect to its support (3),

characterized in that it comprises a device for eliminating activation noise according to one of the preceding claims.

FIG. 1

FIG. 2

0 158 557

FIG. 3

FIG. 4

3